# EUROPEAN PATENT SPECIFICATION

(11) **EP 3 904 156 B1**
(45) Date of publication and mention of the grant of the patent: **29.05.2024**
(21) Application number: 19906091.4
(22) Date of filing: 15.07.2019
(51) Int. Cl.: B60N 2/28, B60Q 9/00

(54) **ISOFIX LOCKING APPARATUS HAVING SELF-DETECTION FUNCTION**
ISOFIX-VERRIEGELUNGSVORRICHTUNG MIT SELBSTDETEKTIONSFUNKTION
APPAREIL DE VERROUILLAGE ISOFIX AYANT UNE FONCTION D'AUTO-DÉTECTION

(30) Priority: 28.12.2018 CN 201822245151 U
(43) Date of publication of application: 03.11.2021
(73) Proprietor: Max-Inf (Ningbo) Baby Product Co., Ltd, Ningbo, Zhejiang 315105 (CN)
(72) Inventor: XU, Lihong, Ningbo, Zhejiang 315105 (CN); PAN, Xiaolu, Ningbo, Zhejiang 315105 (CN)
(74) Representative: Ipside
(86) International application number: PCT/CN2019/095952
(87) International publication number: WO 2020/134031

(56) References cited:
- CN-A- 105 329 125
- CN-A- 107 415 782
- CN-U- 204 978 307
- CN-U- 204 978 307
- CN-U- 207 535 739
- CN-U- 207 931 542
- CN-U- 207 931 542
- JP-A- 2001 239 873
- US-A1- 2003 160 689

## Description

### Technical Field

The present invention relates to the field of child safety seats, in particular to an ISOFIX locking device with a self-detection function.

### Background of the Invention

A child safety seat of the car can provide buffer and protection functions for a child in the event of a collision or sudden deceleration of the car to ensure the safety of the child in the car. Therefore, the safety of the child safety seat is one of main considerations for a consumer while making a purchase. In general, the child safety seat under the ISOFIX standard is fixedly arranged on a car seat through rigid connection of ISOFIX connectors of a base part and ISOFIX interfaces on the car seat.

The connection states of the ISOFIX connectors on the child safety seat and the ISOFIX interfaces on the car seat are directly related to the use safety of the child safety seat, but it is difficult for the user to check and confirm the connection states of the ISOFIX connectors and the ISOFIX interfaces through naked eyes from the outside. Once loose or failed connection of the ISOFIX connectors and the ISOFIX interfaces is not found in time, a great hidden danger will be brought to the safety of the child in the car.

Therefore, an ISOFIX locking device with a self-detection function is desired to solve the problem in the field.

Patent document CN 207 931 542 U disclosed an ISOFIX locking means, which relates to children's safety seat including the ISOFIX device.

### Summary of the Invention

The present invention aims to provide an ISOFIX locking device with a self-detection function, which can detect a connection state of an ISOFIX in real time and remind the user, so that the potential safety risk caused by poor connection of the ISOFIX is avoided and the safety of a child in the car is guaranteed.

In order to achieve the objective, the present invention provides the ISOFIX locking device with the self-detection function, comprising:
an ISOFIX means and a signal collection device, wherein the ISOFIX means comprises an ISOFIX connector and a locking moving part; the locking moving part is linked with one ISOFIX connector; and the signal collection device is arranged on the ISOFIX means, detects a movement state of the locking moving part and transmits detection signals , so that external signal receiving device can determine the connection state of the ISOFIX connector.

In accordance with one preferred embodiment of the present invention, the locking moving part comprises at least one contact block; the contact block passes through the signal collection device with the movement of the locking moving part to change signal states of the signal collection device, so that the signal collection device transmits at least two different detection signals to the external signal receiving device to determine the connection state of the ISOFIX connector.

In accordance with the preferred embodiment of the present invention, the signal collection device comprises at least two electric signal collectors; two electric signal collectors are oppositely arranged on an inner wall of a shell on the ISOFIX means; and the contact block passes between two electric signal collectors with the movement of the locking moving part, and cuts off opposite transmission of the two electric signal collectors when moving between the two electric signal collectors, so that the electric signal collectors transmit at least two different detection signals to the external signal receiving equipment to determine the connection state of the ISOFIX connector.

In accordance with the preferred embodiment of the present invention, the signal collection device further comprises one shell; the shell is arranged on one ISOFIX means and is provided with a channel; two electric signal collectors are oppositely arranged at two sides of the channel separately; and the contact block passes through one channel with the movement of the locking moving part and changes the signal states of the two electric signal collectors.

In accordance with another preferred embodiment of the present invention, the signal collection devices are photoelectric switches; the locking moving part comprises at least one contact block; and the contact block shields or does not shield the photoelectric switch with the movement of the locking moving part, so that the photoelectric switch transmits at least two different detection signals to the external signal receiving device to determine the connection state of the ISOFIX connector.

In accordance with still another preferred embodiment of the present invention, the signal collection devices are magnetic induction switches; the locking moving part comprises at least one magnetic element; and the magnetic element approaches or moves away from one magnetic induction switch with the movement of the locking moving part, so that the magnetic induction switch transmits at least two different detection signals outward to the external signal receiving device to determine the connection state of the ISOFIX connector.

In accordance with the other embodiment of the present invention, the ISOFIX locking device with the self-detection function further comprises signal transmission devices; the signal transmission device is electrically connected with one signal collection device; and the signal collection device transmits the detection signals to the external signal receiving device through the signal transmission device.

Preferably, the signal transmission devices are signal wires or wireless communication modules.

The objective and other objectives, characteristics and advantages of the present invention shall be further clarified by the following detailed description, drawings and appended claims.

### Brief description of the Drawings

FIG. 1 is a schematic diagram of an ISOFIX locking device with a self-detection function in accordance with the first preferred embodiment of the present invention.
FIG. 2 is a schematical side view of the ISOFIX locking device with the self-detection function in accordance with the first preferred embodiment of the present invention.
FIG. 3 is a schematic diagram of one signal collection device in accordance with the first preferred embodiment of the present invention.

In the drawings: ISOFIX means 10; ISOFIX connector 11; locking moving part 12; contact block 121; signal collection device 20; shell 21; electric signal collector 22; electric signal collector 23; power wire 24; channel 25; and signal wire 30.

### Detailed Description of Embodiments

The present invention will be further described below in combination with the drawings and specific embodiments. It should be noted that, various embodiments or various technical characteristics described below may be arbitrarily combined under the condition of no conflict to form new embodiments.

The following description is used for disclosing the present invention to enable those skilled in the art to practice the present invention. The preferred embodiments are described below by way of examples only, and other obvious variations will occur to those skilled in the art.

It will be understood by those skilled in the art that in the disclosure of the present invention, orientation or position relationships indicated by terms, such as "longitudinal", "transverse", "upper", "lower", "front", "rear", "left", "right", "vertical", "horizontal", "top", "bottom", "inner" and "outer" are based on the orientation or position relationships shown in the drawings, and are merely for convenience of description of the present application and simplified description, but not for indicating or suggesting that the specified device or element must have a particular orientation or must be constructed and operated in the particular orientation. Therefore, the terms should not be understood as limits to the present application.

It will be understood that the term "one" should be understood as "at least one" or "one or more", that is to say, in one embodiment, the number of one element may be one, while in the other embodiments, the number of the elements may be plural, therefore, the term "one" should not be understood as the limit to the number.

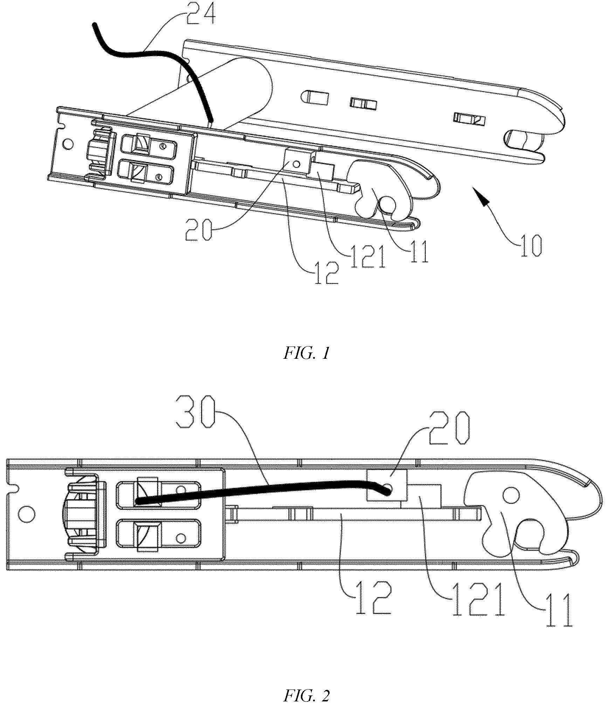

Referring to FIG. 1 to FIG. 3 of the drawings, an ISOFIX locking device with a self-detection function in accordance with the first preferred embodiment of the present invention will be clarified in the next description. The ISOFIX locking device comprises an ISOFIX means 10 and signal collection devices 20, wherein the ISOFIX means 10 comprises an ISOFIX connector 11 and a locking moving part 12; and the signal collection device 20 is arranged on one ISOFIX means 10.

The ISOFIX connectors 11 are pushed into ISOFIX interfaces arranged on a car seat under the action of external force to be locked, and the ISOFIX connectors 11 are released from the ISOFIX interfaces to reset under the action of reset elements (not shown in the drawing) after being unlocked.

The locking moving parts 12 are linked with the ISOFIX connectors 11 separately. When the ISOFIX connectors 11 are in a locked state, the locking moving parts 12 move forwards under the action of springs (not shown in the drawing) to abut against the ISOFIX connectors 11, so as to prevent the ISOFIX connectors 11 from rotating to be released.

The signal collection devices 20 detect movement states of the locking moving parts 12 and transmit detection signals outward, so that external signal receiving device can determine connection states of the ISOFIX connectors 11.

The ISOFIX connectors 11 are linked with the locking moving parts 12, so that the movement states of the locking moving parts 12 are changed with the change in the connection states of the ISOFIX connectors 11, and the connection states of the ISOFIX connectors 11 can be known by detecting the movement states of the locking moving parts 12 through the signal collection devices 20. If the phenomenon of loose or poor connection of the ISOFIX connectors 11 and the ISOFIX interfaces appears, the signal collection devices 20 transmit detection signals to remind the user, so as to ensure the safety of a child in the car.

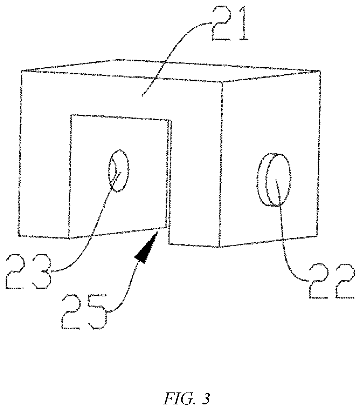

In particular, as shown in FIG. 3, the signal collection device 20 comprises a shell 21, an electric signal collector 22 and an electric signal collector 23. The shell 21 is provided with a channel 25; and the electric signal collector 22 and the electric signal collector 23 are oppositely arranged at two sides of the channel 25 separately. The shell 21 is arranged above one locking moving part 12; one contact block 121 is arranged on the upper surface of the locking moving part 12; and the contact block 121 enters and exits one channel 25 with the movement of the locking moving part 12.

In other possible embodiments, the electric signal collector 22 and the electric signal collector 23 can also be directly and oppositely arranged on the inner wall of one shell on the ISOFIX means 10, so as to form one channel for the contact block 121 to enter and exit.

The contact block 121 cuts off opposite transmission of the electric signal collector 22 and electric signal collector 23 when moving therebetween, so that the electric signal collector 22 and the electric signal collector 23 transmit two different detection signals to the external signal receiving device to determine the connection state of the ISOFIX connector 11.

The ISOFIX connector 11 drives the locking moving part 12 to transversely move during rotation. When the ISOFIX connector 11 is in a locked state, the contact block 121 does not cut off the opposite transmission between the electric signal collector 22 and electric signal collector 23, and the electric signal collector 22 and electric signal collector 23 transmit first signals outward. When the ISOFIX connector 11 is in a loose state, the contact block 121 moves between the electric signal collector 22 and electric signal collector 23 and cuts off the opposite transmission therebetween, and the electric signal collector 22 and the electric signal collector 23 transmit second signals outward.

Those skilled in the art will readily understand that, the shape of the contact block 121 is not limited in the present invention as long as it can enter and exit the channel 25.

The signal collection device 20 is powered by an external power supply through a power wire 24.

Furthermore, the ISOFIX locking device with the self-detection function further comprises signal transmission devices. The signal transmission device is electrically connected with one signal collection device 20. The signal collection device 20 transmits the detection signals to the external signal receiving device through the signal transmission device.

Preferably, in the embodiment, the signal transmission devices are signal wires 30. These skilled in the art will readily understand that, in other possible preferred embodiments, the signal transmission devices may also be wireless communication modules, such as Bluetooth modules, WiFi modules, 3G modules and 4G modules.

It will be further understood that the external signal receiving device may be, but not limited to an alarm device, portable electronic device of the user, such as a mobile phone, a motor system of the car, etc.

The following description is in accordance with the second preferred embodiment of the present invention.

This embodiment is based on the first preferred embodiment, and a difference from the first embodiment is that the signal collection devices 20 are photoelectric switches.

The contact block 121 shields or does not shield the photoelectric switch with the movement of the locking moving part 12, so that the photoelectric switch transmits two different detection signals to the external signal receiving device to determine the connection state of the ISOFIX connector 11.

The ISOFIX connector 11 drives the locking moving part 12 to transversely move during rotation. When the ISOFIX connector 11 is in the locked state, the contact block 121 does not shield the photoelectric switch and the photoelectric switch transmits the first signals outward. When the ISOFIX connector 11 is in the loose state, the contact block 121 moves to the vicinity of the photoelectric switch to shield the photoelectric switch and the photoelectric switch transmits the second signals outward.

The following description is in accordance with the third preferred embodiment of the present invention.

This embodiment is based on the first preferred embodiment, and a difference from the first embodiment is that the signal collection devices 20 are magnetic induction switches and the contact blocks 121 are magnetic elements.

The magnetic element approaches or moves away from the magnetic induction switch with the movement of the locking moving part 12, so that the magnetic induction switch transmits two different detection signals to the external signal receiving device to determine the connection state of the ISOFIX connector 11.

The ISOFIX connector 11 drives the locking moving part 12 to transversely move during rotation. When the ISOFIX connector 11 is in the locked state, the magnetic element moves away from the magnetic induction switch and the magnetic induction switch transmits the first signals outward. When the ISOFIX connector 11 is in the loose state, the magnetic element approaches the magnetic induction switch and the magnetic induction switch transmits the second signals outward.

The ISOFIX locking device with the self-detection function provided by the present invention detects the movement states of the locking moving parts 12 linked with the ISOFIX connectors 11 through the signal collection devices 20, detects the connection state of an ISOFIX system in real time and reminds the user, so that the potential safety risk caused by poor connection of an ISOFIX is avoided and the safety of the child in the car is guaranteed.

## Claims

1. An ISOFIX locking device with a self-detection function, comprising:
an ISOFIX means (10) and signal collection devices (20), wherein the ISOFIX means (10) comprises an ISOFIX connector (11) and a locking moving part (12); the locking moving part is linked with one ISOFIX connector (11); and the signal collection device is arranged on the ISOFIX means, detects a movement state of the locking moving part (12) and transmits detection signals, so that external signal receiving device can determine a connection state of the ISOFIX connector (11), **characterized in that**, the locking moving part (12) comprises at least one contact block (121); each contact block passes through the signal collection device with the movement of the locking moving part (12) to change signal states of the signal collection device, so that the signal collection device transmits at least two different detection signals to the external signal receiving device to determine the connection state of the ISOFIX connector (11).

2. The ISOFIX locking device with the self-detection function according to claim 1, wherein the signal collection device comprises at least two electric signal collectors; two electric signal collectors are oppositely arranged on an inner wall of a shell on the ISOFIX means; and the contact block (121) passes between two electric signal collectors with the movement of the locking moving part (12), and cuts off opposite transmission of the two electric signal collectors when moving between the two electric signal collectors, so that the electric signal collectors transmit at least two different detection signals to the external signal receiving device to determine the connection state of the ISOFIX connector (11).

3. The ISOFIX locking device with the self-detection function according to claim 2, wherein the signal collection device further comprises one shell; the shell is arranged on the ISOFIX means (10) and is provided with a channel; two electric signal collectors are oppositely arranged at two sides of the channel; and the contact block (121) passes through one channel with the movement of the locking moving part (12) and changes the signal states of the two electric signal collectors.

4. The ISOFIX locking device with the self-detection function according to claim 1, wherein the signal collection devices (20) are photoelectric switches; and the contact block (121) shields or does not shield one photoelectric switch with the movement of the locking moving part (12), so that the photoelectric switch transmits at least two different detection signals to the external signal receiving device to determine the connection state of the ISOFIX connector (11).

5. The ISOFIX locking device with the self-detection function according to claim 1, wherein the signal collection devices (20) are magnetic induction switches; the contact blocks (121) are magnetic elements; and the magnetic element approaches or moves away from one magnetic induction switch with the movement of the locking moving part (12), so that the magnetic induction switch transmits at least two different detection signals to the external signal receiving device to determine the connection state of the ISOFIX connector (11).

6. The ISOFIX locking device with the self-detection function according to any one of claims 1 to 5, further comprising signal transmission devices, wherein the signal transmission device is electrically connected with one signal collection device; and the signal collection device transmits the detection signals to the external signal receiving device through the signal transmission device.

7. The ISOFIX locking device with the self-detection function according to claim 6, wherein the signal transmission devices are wired or wireless communication modules.

## Patentansprüche

1. ISOFIX-Verriegelungsvorrichtung mit Selbsterkennungsfunktion, die Folgendes umfasst:
eine ISOFIX-Einrichtung (10) und Signalsammelvorrichtungen (20), wobei die ISOFIX-Einrichtung (10) ein ISOFIX-Verbindungsstück (11) und ein bewegliches Verriegelungsteil (12) umfasst; das bewegliche Verriegelungsteil mit einem ISOFIX-Verbindungsstück (11) verbunden ist; und die Signalsammelvorrichtung an der ISOFIX-Einrichtung angeordnet ist, einen Bewegungszustand des beweglichen Verriegelungsteils (12) erkennt und Erkennungssignale überträgt, so dass eine externe Signalempfangsvorrichtung einen Verbindungszustand des ISOFIX-Verbindungsstücks (11) bestimmen kann, **dadurch gekennzeichnet, dass** das bewegliche Verriegelungsteil (12) mindestens einen Kontaktblock (121) umfasst; wobei sich jeder Kontaktblock mit der Bewegung des beweglichen Verriegelungsteils (12) durch die Signalsammelvorrichtung bewegt, um Signalzustände der Signalsammelvorrichtung zu ändern, so dass die Signalsammelvorrichtung mindestens zwei unterschiedliche Erkennungssignale an die externe Signalempfangsvorrichtung überträgt, um den Verbindungzustand des ISOFIX-Verbindungsstücks (11) zu bestimmen.

2. ISOFIX-Verriegelungsvorrichtung mit Selbsterkennungsfunktion nach Anspruch 1, wobei die Signalsammelvorrichtung mindestens zwei elektrische Signalsammler umfasst; zwei elektrische Signalsammler gegenüberliegend an einer Innenwand einer Schale an der ISOFIX-Einrichtung angeordnet sind; und sich der Kontaktblock (121) mit der Bewegung des beweglichen Verriegelungsteils (12) zwischen zwei elektrischen Signalsammlern hindurch bewegt und die entgegengesetzte Übertragung der beiden elektrischen Signalsammler unterbricht, wenn er sich zwischen den beiden elektrischen Signalsammlern bewegt, so dass die elektrischen Signalsammler mindestens zwei unterschiedliche Erkennungssignale an die externe Signalempfangsvorrichtung übertragen, um den Verbindungsstatus des ISOFIX-Verbindungsstücks (11) zu bestimmen.

3. ISOFIX-Verriegelungsvorrichtung mit Selbsterkennungsfunktion nach Anspruch 2, wobei die Signalsammelvorrichtung ferner eine Schale umfasst; die Schale auf der ISOFIX-Einrichtung (10) angeordnet und mit einem Kanal versehen ist; zwei elektrische Signalsammler gegenüberliegend an zwei Seiten des Kanals angeordnet sind; und sich der Kontaktblock (121) mit der Bewegung des beweglichen Verriegelungsteils (12) durch einen Kanal bewegt und die Signalzustände der beiden elektrischen Signalsammler ändert.

4. ISOFIX-Verriegelungsvorrichtung mit Selbsterkennungsfunktion nach Anspruch 1, wobei die Signalsammelvorrichtungen (20) fotoelektrische Schalter sind; und der Kontaktblock (121) einen fotoelektrischen Schalter mit der Bewegung des beweglichen Verriegelungsteils (12) abschirmt oder ihn nicht abschirmt, so dass der fotoelektrische Schalter mindestens zwei unterschiedliche Erkennungssignale an die externe Signalempfangsvorrichtung überträgt, um den Verbindungszustand des ISOFIX-Verbindungsstücks (11) zu bestimmen.

5. ISOFIX-Verriegelungsvorrichtung mit Selbsterkennungsfunktion nach Anspruch 1, wobei die Signalsammelvorrichtungen (20) magnetische Induktionsschalter sind; die Kontaktblöcke (121) magnetische Elemente sind; und sich das Magnetelement mit der Bewegung des beweglichen Verriegelungsteils (12) einem magnetischen Induktionsschalter nähert oder sich von diesem wegbewegt, so dass der magnetische Induktionsschalter mindestens zwei unterschiedliche Erkennungssignale an die externe Signalempfangsvorrichtung überträgt, um den Verbindungszustand des ISOFIX-Verbindungsstücks (11) zu bestimmen.

6. ISOFIX-Verriegelungsvorrichtung mit Selbsterkennungsfunktion nach einem der Ansprüche 1 bis 5, die ferner Signalübertragungsvorrichtungen umfasst, wobei die Signalübertragungsvorrichtung elektrisch mit einer Signalsammelvorrichtung verbunden ist; und die Signalsammelvorrichtung die Erkennungssignale über die Signalübertragungsvorrichtung an die externe Signalempfangsvorrichtung überträgt.

7. ISOFIX-Verriegelungsvorrichtung mit Selbsterkennungsfunktion nach Anspruch 6, wobei die Signalübertragungsvorrichtungen drahtgebundene oder drahtlose Kommunikationsmodule sind.

## Revendications

1. Dispositif de verrouillage ISOFIX doté d'une fonction d'auto-détection, comprenant :
un moyen ISOFIX (10) et des dispositifs de collecte de signaux (20), le moyen ISOFIX (10) comprenant un connecteur ISOFIX (11) et une partie mobile de verrouillage (12) ; la partie mobile de verrouillage est liée à un connecteur ISOFIX (11) ; et le dispositif de collecte de signaux est agencé sur le moyen ISOFIX, détecte un état de mouvement de la partie mobile de verrouillage (12) et transmet des signaux de détection, de sorte qu'un dispositif de réception de signaux externes puisse déterminer un état de connexion du connecteur ISOFIX (11), **caractérisé en ce que**, la partie mobile de verrouillage (12) comprend au moins un bloc de contact (121) ; chaque bloc de contact passe à travers le dispositif de collecte de signaux avec le mouvement de la partie mobile de verrouillage (12) pour modifier des états de signaux du dispositif de collecte de signaux, de sorte que le dispositif de collecte de signaux transmette au moins deux signaux de détection différents au dispositif de réception de signaux externes pour déterminer l'état de connexion du connecteur ISOFIX (11).

2. Dispositif de verrouillage ISOFIX doté de la fonction d'auto-détection selon la revendication 1, dans lequel le dispositif de collecte de signaux comprend au moins deux collecteurs de signaux électriques ; deux collecteurs de signaux électriques sont agencés de manière opposée sur une paroi interne d'une enveloppe sur le moyen ISOFIX ; et le bloc de contact (121) passe entre deux collecteurs de signaux électriques avec le mouvement de la partie mobile de verrouillage (12), et coupe une transmission opposée des deux collecteurs de signaux électriques lors du mouvement entre les deux collecteurs de signaux électriques, de sorte que les collecteurs de signaux électriques transmettent au moins deux signaux de détection différents au dispositif de réception de signaux externes pour déterminer l'état de connexion du connecteur ISOFIX (11).

3. Dispositif de verrouillage ISOFIX doté de la fonction d'auto-détection selon la revendication 2, dans lequel le dispositif de collecte de signaux comprend en outre une enveloppe ; l'enveloppe est agencée sur le moyen ISOFIX (10) et est dotée d'un canal ; deux collecteurs de signaux électriques sont agencés de manière opposée au niveau de deux côtés du canal ; et le bloc de contact (121) passe à travers un canal avec le mouvement de la partie mobile de verrouillage (12) et modifie les états de signaux des deux collecteurs de signaux électriques.

4. Dispositif de verrouillage ISOFIX doté de la fonction d'auto-détection selon la revendication 1, dans lequel les dispositifs de collecte de signaux (20) sont des commutateurs photoélectriques ; et le bloc de contact (121) protège ou ne protège pas un commutateur photoélectrique avec le mouvement de la partie mobile de verrouillage (12), de sorte que le commutateur photoélectrique transmette au moins deux signaux de détection différents au dispositif de réception de signaux externes pour déterminer l'état de connexion du connecteur ISOFIX (11).

5. Dispositif de verrouillage ISOFIX doté de la fonction d'auto-détection selon la revendication 1, dans lequel les dispositifs de collecte de signaux (20) sont des commutateurs à induction magnétique ; les blocs de contact (121) sont des éléments magnétiques ; et l'élément magnétique s'approche ou s'éloigne d'un commutateur à induction magnétique avec le mouvement de la partie mobile de verrouillage (12), de sorte que le commutateur à induction magnétique transmette au moins deux signaux de détection différents au dispositif de réception de signaux externes pour déterminer l'état de connexion du connecteur ISOFIX (11).

6. Dispositif de verrouillage ISOFIX doté de la fonction d'auto-détection selon l'une quelconque des revendications 1 à 5, comprenant en outre des dispositifs de transmission de signaux, dans lequel le dispositif de transmission de signaux est électriquement connecté à un dispositif de collecte de signaux ; et le dispositif de collecte de signaux transmet les signaux de détection au dispositif de réception de signaux externes par le biais du dispositif de transmission de signaux.

7. Dispositif de verrouillage ISOFIX doté de la fonction d'auto-détection selon la revendication 6, dans lequel les dispositifs de transmission de signaux sont des modules de communication filaires ou sans fil.
